# EUROPEAN PATENT SPECIFICATION

(11) **EP 0 654 639 B1**
(45) Date of publication and mention of the grant of the patent: **16.09.1998**
(21) Application number: 94307823.8
(22) Date of filing: 25.10.1994
(51) Int. Cl.: F23R 3/14, F23R 3/26, F23C 7/00

(54) **Adjustable swirl vanes for combustor of gas turbine**
Verstellbaren Wirbelleitschaufeln einer Brennkammer einer Gasturbine
Ailettes de tourbillon ajustables pour bruleur de turbine à gaz

(30) Priority: 27.10.1993 US 141757
(43) Date of publication of application: 24.05.1995
(73) Proprietor: WESTINGHOUSE ELECTRIC CORPORATION, Pittsburgh Pennsylvania 15222 (US)
(72) Inventor: Parker, David M., Oviedo, Florida 32765 (US); Foss, David T., Winter Park, Florida 32792 (US); Lowe, Perry E., Winter Park, Florida 32792 (US); Amos, David J., Orlando, Florida 32817 (US)
(74) Representative: van Berlyn, Ronald Gilbert

(56) References cited:
- WO-A-92/07221
- DE-A- 3 819 898
- FR-A- 1 014 072
- US-A- 2 271 587
- US-A- 3 746 499

## Description

The present invention relates to a combustor for burning fuel in compressed air. More specifically, the present invention relates to a low NOx combustor for a gas turbine.

In a gas turbine, fuel is burned in compressed air, produced by a compressor, in one or more combustors. Traditionally, such combustors had a primary combustion zone in which an approximately stoichiometric mixture of fuel and air was formed and burned in a diffusion type combustion process. Additional air was introduced into the combustor downstream of the primary combustion zone. Although the overall fuel/air ratio was considerably less than stoichiometric, the fuel/air mixture was readily ignited at start-up and good flame stability was achieved over a wide range in firing temperatures due to the locally richer nature of the fuel/air mixture in the primary combustion zone.

Unfortunately, use of such approximately stoichiometric fuel/air mixtures resulted in very high temperatures in the primary combustion zone. Such high temperatures promoted the formation of oxides of nitrogen ("NOx"), considered an atmospheric pollutant. It is known that combustion at lean fuel/air ratios reduces NOx formation. However, achieving such lean mixtures requires that the fuel be widely distributed and very well mixed into the combustion air. This can be accomplished by introducing the fuel into both primary and secondary annular air inlets using, in the case of gas fuel, fuel spray tubes distributed around the circumference of the annulus.

It has been found that mixing of the fuel and air is enhanced by using separate passages to divide the air in the primary air inlet into two streams. Radial swirlers, comprised of a number of swirl vanes distributed around the circumference of these passages, impart a swirl angle to the air that aids in the mixing of the fuel and air. The swirlers in each primary inlet passage are opposite handed so that the air exiting from the pre-mixing zone has little net swirl angle. Such a combustor is disclosed in "Industrial RB211 Dry Low Emission Combustion" by J. Willis et al., American Society of Mechanical Engineers (May 1993).

Unfortunately, such combustors suffer from a variety of drawbacks. First, the swirl vanes are integrally cast into a primary air inlet assembly, making it impossible to change the swirl angle once the combustor has been built. This makes it difficult to optimize the swirl conditions since it is not possible for the combustor designer to predict in advance the specific swirl angle that should be imparted to the air in order to achieve optimum results at a minimum pressure drop. Second, there is no capability of burning liquid fuel in such combustors since fuel spray tubes are relied upon exclusively to introduce fuel. Third, the fuel spray tubes that introduce fuel into the secondary air inlet passage are oriented axially and located upstream of the passage's inlet. This results in the failure of a portion of the fuel to enter the secondary air inlet passage, causing fouling and contamination of the combustor components exposed to the fuel. Fourth, the inner liner enclosing the primary combustion zone is subject to over-heating and deterioration, especially at its outlet edge.

Accordingly, it is the general object of the current invention to provide a gas turbine combustor having adjustable swirl vanes, dual fuel capability, accurate introduction of fuel into the secondary pre-mixing zone and Reference is made to prior art document WO-A-92/07221 which discloses a gas turbine engine combustion chamber having a longitudinal axis and comprising first air intake means, primary fuel injector means and a first fuel and air mixing zone, said first fuel and air mixing zone being defined by at least one annular wall having an upstream end and an upstream wall connected to said upstream end of said annular wall, said annular wall having a longitudinal axis extending coaxially with said longitudinal axis of said combustion chamber at least partly along said axes, said upstream wall having at least one aperture, said first air intake means comprising at least one first flow swirler and at least one second flow swirler for introducing first air into said first fuel and air mixing zone through said aperture in said upstream wall, said first flow swirler and said second flow swirler being disposed at least partly radially with respect to said longitudinal axis and upstream of said annular wall along said axis with said first flow swirler being located closer to said end wall than said second flow swirler, said first flow swirler having vanes to swirl air in one direction, said second flow swirler having vanes to swirl air in a direction generally opposite to said one direction, said vanes of each said flow swirler defining passages therebetween, said primary fuel injector means being located to supply fuel into at least one of said passages between said vanes of said first flow swirler and said vanes of said second flow swirler.

The invention consists in a combustor in a gas turbine having a compressor for producing compressed air; the combustor heating said compressed air, said combustor comprising a first substantially cylindrical liner forming a chamber therein for containing a combustion zone, a second substantially cylindrical liner forming an outer annular passage encircling said first liner; a flow guide forming a first inlet passage having first and second portions, said first portion extending axially and being concentric with said liner, said second portion extending radially and encircling said first portion; a second inlet passage for said chamber, said second inlet passage having first and second portions, said first portion of said second inlet passage formed between a fuel nozzle and said flow guide and extending axially and being concentric with said first portion of said first inlet passage, said second portion of said second inlet passage extending radially and encircling said first portion of said second inlet passage; a plurality of first swirl vanes disposed in said second portion of said first inlet passage; and a plurality of second swirl vanes disposed in said second portion of said second inlet passage; a plurality of fuel discharge means extending into said outer annular passage; means for rotating said first and second swirl vanes; a third substantially cylindrical liner enclosed by said second liner, said outer annular passage being formed between said first and second liners, said first and third liners forming an inner annular passage therebetween; and there being means for introducing cooling air into said inner annular passage; the combustor being characterized by a circumferentially extending baffle disposed in said inner annular passage.

The invention will become more readily apparent from the following description of a preferred embodiment thereof shown, by way of example only, in the accompanying drawings, wherein :
Figure 1 is a schematic diagram of a gas turbine employing the combustor of the current invention;
Figure 2 is a longitudinal cross-section through the combustion section of the gas turbine shown in Figure 1;
Figure 3 is a longitudinal cross-section through the combustor shown in Figure 2;
Figure 4 is an isometric view of the air inlet portion of the combustor shown in Figure 3, with the flow guide shown in phantom for clarity;
Figure 5 is a transverse cross-section taken through lines V-V shown in Figure 3;
Figure 6 is a cross-section taken through line VI-VI shown in Figure 5 and shows a portion of the combustor air inlet in the vicinity of the swirl vanes, except that in Figure 6 the swirl vanes have been rotated from their position shown in Figure 5 so as to be essentially oriented at 0° to the radial direction to allow viewing of the retainer pins in both vanes in a single cross-section;
Figure 7 is a detailed view of the portion of Figure 3 enclosed by the oval marked VII;
Figure 8 is a a cross-section taken through lines VIII-VIII shown in Figure 6; and
Figure 9 is an alternate embodiment of the swirl vane support shown in Figure 6.

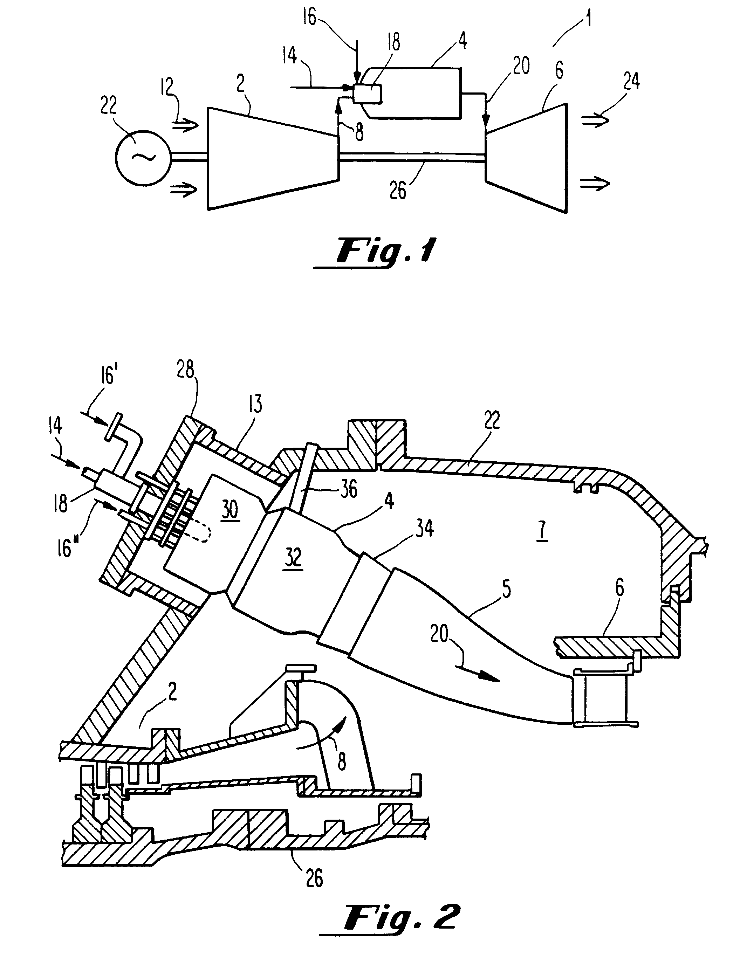

Referring to the drawings, there is shown in Figure 1 a schematic diagram of a gas turbine 1. The gas turbine 1 is comprised of a compressor 2 that is driven by a turbine 6 via a shaft 26. Ambient air 12 is drawn into the compressor 2 and compressed. The compressed air 8 produced by the compressor 2 is directed to a combustion system that includes one or more combustors 4 and a fuel nozzle 18 that introduces both gaseous fuel 16 and oil fuel 14 into the combustor. In the combustors 4, the fuel is burned in the compressed air 8, thereby producing a hot compressed gas 20.

The hot compressed gas 20 produced by the combustor 4 is directed to the turbine 6 where it is expanded, thereby producing shaft horsepower for driving the compressor 2, as well as a load, such as an electric generator 22. The expanded gas 24 produced by the turbine 6 is exhausted, either to the atmosphere directly or, in a combined cycle plant, to a heat recovery steam generator and then to atmosphere.

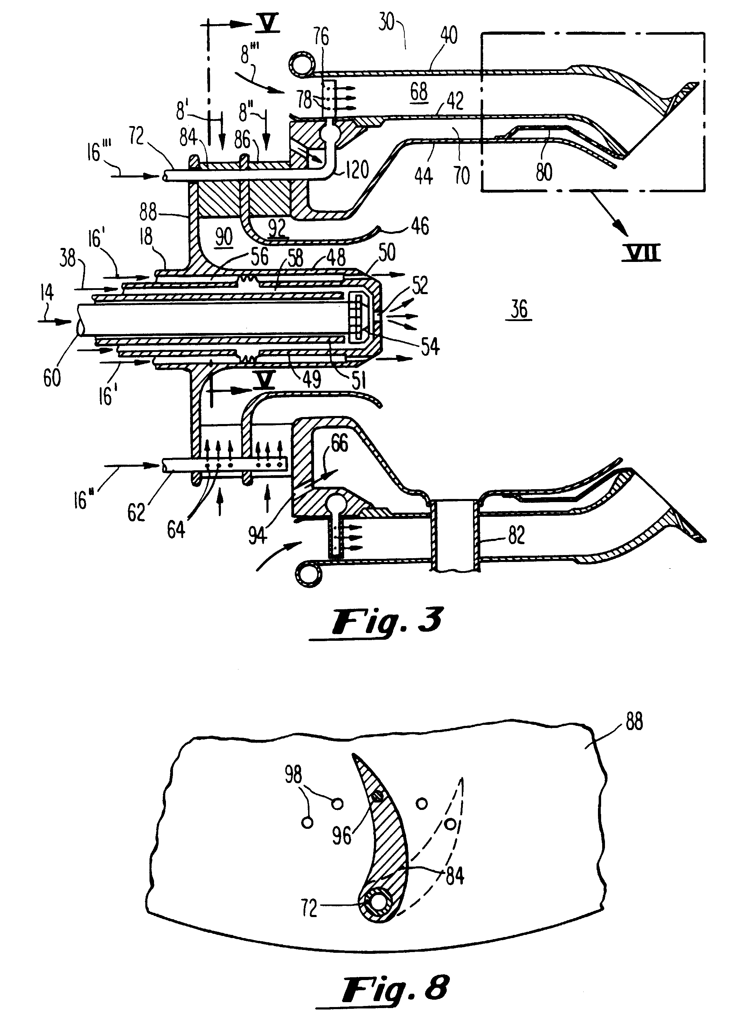

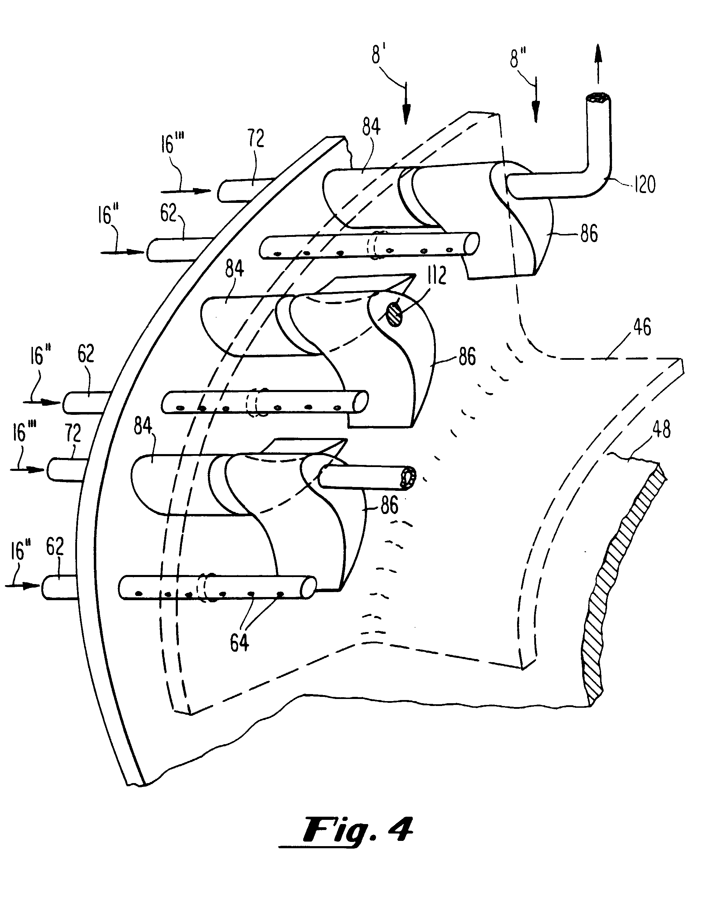

Figure 2 shows the combustion section of the gas turbine 1. A circumferential array of combustors 4, only one of which is shown in Figure 4, are connected by cross-flame tubes 82, shown in Figure 3, and enclosed by a shell 22. Each combustor has a primary zone 30 and a secondary zone 32. The hot gas 20 exiting from the secondary zone 32 is directed by a duct 5 to the turbine section 6. The primary zone 30 of the combustor 4 is supported by a support plate 28. The support plate 28 is attached to a cylinder 13 that extends from the shell 22 and encloses the primary zone 30. The secondary zone 32 is supported by eight arms (not shown) extending from the support plate 13. Separately supporting the primary and second zones 30 and 32, respectively, reduces thermal stresses due to differential thermal expansion.

Referring to Figure 3, a primary combustion zone 36, in which a lean mixture of fuel and air is burned, is located within the primary zone 30 of the combustor 4. Specifically, the primary combustion zone 36 is enclosed by a cylindrical inner liner 44 portion of the primary zone 30. The inner liner 44 is encircled by a cylindrical middle liner 42 that is, in turn, encircled by a cylindrical outer liner 40. The liners 40, 42 and 44 are concentrically arranged so that an inner annular passage 70 is formed between the inner and middle liners 44 and 42, respectively, and an outer annular passage 68 is formed between the middle and outer liners 42 and 44, respectively. Cross-flame tubes 82, one of which is shown in Figure 3, extend through the liners 40, 42 and 44 and connect the primary combustion zones 36 of adjacent combustors 4 to facilitate ignition.

As shown in Figure 3, according to the current invention, a dual fuel nozzle 18 is centrally disposed within the primary zone 30. The fuel nozzle 18 is comprised of a cylindrical outer sleeve 48, which forms an outer annular passage 56 with a cylindrical middle sleeve 49, and a cylindrical inner sleeve 51, which forms an inner annular passage 58 with the middle sleeve 49. An oil fuel supply tube 60 is disposed within the inner sleeve 51 and supplies oil fuel 14 to an oil fuel spray nozzle 54. The oil fuel 14 from the spray nozzle 54 enters the primary combustion zone 36 via an oil fuel discharge port 52 formed in the outer sleeve 48. Gas fuel 16' flows through the outer annular passage 56 and is discharged into the primary combustion zone 36 via a plurality of gas fuel ports 50 formed in the outer sleeve 48. In addition, cooling air 38 flows through the inner annular passage 58.

Compressed air from the compressor 2 is introduced into the primary combustion zone 36 by a primary air inlet formed in the front end of the primary zone 30. As shown in Figure 3, the primary air inlet is formed by first and second passages 90 and 92 that divide the incoming air into two streams 8' and 8''. The first inlet passage 90 has an upstream radial portion and a downstream axial portion. The upstream portion of the first passage 90 is formed between a radially extending circular flange 88 and the radially extending portion of a flow guide 46. The downstream portion is formed between the flow guide 46 and the outer sleeve 48 of the fuel nozzle 18 and is encircled by the second inlet passage 92.

The second inlet passage 92 also has an upstream radial portion and a downstream axial portion. The upstream portion of second passage 92 is formed between the radially extending portion of the flow guide 46 and a radially extending portion of the inner liner 44. The downstream portion of second passage 92 is formed between the axial portion of the flow guide 46 and an axially extending portion of the inner liner 44 and is encircled by the upstream portion of the passage 92. As shown in Figure 3, the upstream portion of the second inlet passage 92 is disposed axially downstream from the upstream portion of first inlet passage 90 and the downstream portion of second inlet passage 92 encircles the downstream portion of the first inlet passage 90.

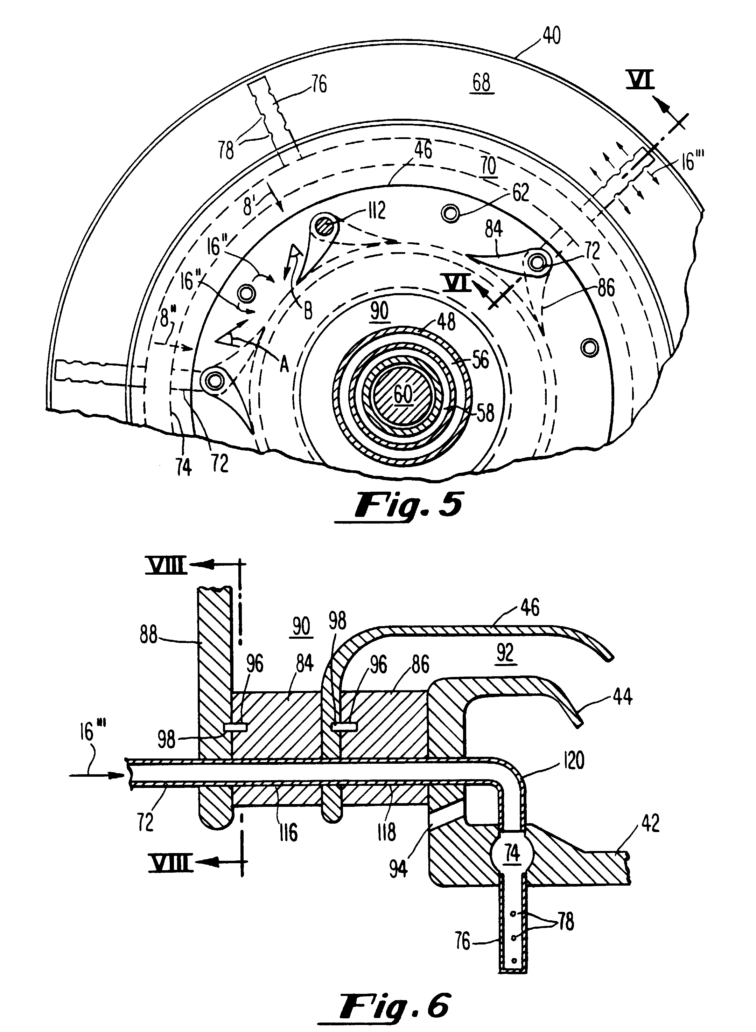

As shown in Figures 3-5, a number of axially oriented, tubular primary fuel spray pegs 62 are distributed around the circumference of the primary air inlet so as to extend through the upstream portions of the both the first and second air inlet passages 90 and 92. Two rows of gas fuel discharge ports 64 are distributed along the length of each of the primary fuel pegs 62 so as to direct gas fuel 16'' into the air steams 8' and 8'' flowing through the inlet air passages 90 and 92. As shown best in Figure 5, the gas fuel discharge ports 64 are oriented so as to discharge the gas fuel 16'' circumferentially in the clockwise and counterclockwise directions.

As also shown in Figures 3-5, a number of swirl vanes 84 and 86 are distributed around the circumference of the upstream portions of the air inlet passages 90 and 92. In the preferred embodiment, a swirl vane is disposed between each of the primary fuel pegs 62. As shown in Figure 5, the swirl vanes 84 in the inlet passage 90 impart a counterclockwise (when viewed in the direction of the axial flow) rotation to the air stream 8' so that the air forms a swirl angle B with the radial direction. The swirl vanes 86 in the inlet passage 92 impart a clockwise rotation to the air stream 8'' so that the air forms a swirl angle A with the radial direction. The swirl imparted by the vanes 84 and 86 to the air streams 8' and 8'' helps ensure good mixing between the gas fuel 16'' and the air, thereby eliminating locally fuel rich mixtures and the associated high temperatures that increase NOx generation.

The outer annular passage 68 forms a secondary air inlet for the combustor through which air stream 8''' flows into the secondary zone 32. A number of secondary gas fuel spray pegs 76 are circumferentially distributed around the secondary air inlet passage 68. According to an important aspect of the current invention, the secondary fuel pegs 76 are disposed within the secondary air inlet passage 68 and are radially oriented to ensure that all of the gas fuel 16"' is properly directed into the secondary air inlet passage. The secondary fuel pegs 76 are supplied with fuel 16''' from a circumferentially extending manifold 74, shown best in Figure 6.

Two rows of gas fuel discharge ports 78 are distributed along the length of each of the secondary fuel pegs 76 so as to direct gas fuel 16"' into the secondary air steams 8''' flowing through the secondary air inlet passage 68. As shown best in Figure 5, the gas fuel discharge ports 78 are oriented so as to discharge the gas fuel 16"' circumferentially in both the clockwise and counterclockwise directions. Because of the 180° turn made by the secondary air 8''' as it enters passage 68, the radial velocity distribution of the air will be non-linear. Hence, the spacing between the fuel discharge ports 78 may be adjusted to match the velocity distribution, thereby providing optimum mixing of the fuel and air.

In operation, a flame is initially established in the primary combustion zone 36 by the introduction of fuel, either oil 14 or gas 16', via the central fuel nozzle 18. As increasing load on the turbine 6 requires higher firing temperatures, additional fuel is added by introducing gas fuel 16'' via the primary fuel pegs 62. Since the primary fuel pegs 62 result in a much better distribution of the fuel within the air, they produce a leaner fuel/air mixture than the central nozzle 18 and hence lower NOx. Thus, once ignition is established in the primary combustion zone 36, the fuel to the central nozzle 18 can be shut-off. Further demand for fuel flow beyond that supplied by the primary fuel pegs 62 can then be satisfied by supplying additional fuel 16"' via the secondary fuel pegs 76.

As shown in Figure 3, preferably, the swirl vanes 84 and 86 are oriented in opposition to each other so that the swirl angles A and B tend to cancel each other out, resulting in zero net swirl in the primary combustion zone 36. The optimum angle for the swirl vanes 84 and 86 that will result in good mixing with a minimum of pressure drop will depend on the specific combustor design and is difficult to predict in advance. Therefore, according to an important aspect of the current invention, the swirl vanes 84 and 86 can be rotated into various angles.

As shown in Figures 6 and 8, the rotatability of the swirl vanes 84 and 86 is achieved by rotatably mounting the swirl vanes 84 and 86 in pairs along a common axis. In the preferred embodiment, this is accomplished by mounting alternate swirl vane pairs on shafts formed by the tubes 72 that supply fuel 16"' to the secondary fuel pegs 76 -- specifically, the fuel peg supply tubes 72 extend through close fitting holes 116 and 118 in the swirl vanes 84 and 86. The remaining swirl vane pairs are rotatably mounted on close fitting alignment bolts, such as the bolts 112 shown in Figure 9, instead of on the secondary fuel peg supply tubes 72. In addition to allowing rotation of the swirl vanes, the alignment bolts 112 serve to clamp the assembly together and provide concentric alignment of flow guide 46 and the inner liner 44.

As shown in Figure 6, a pin 96 is installed in each swirl vane and extends into a hole 98 that is formed in either the flange 88, in the case of the swirl vanes 84, or in the radial portion of the flow guide 46, in the case of the swirl vanes 86. The pins 96 lock the swirl vanes into a predetermined angular orientation.

As shown in Figure 8, a number of lock pin holes 98 are formed in the flange 88 for each swirl vane 84. These holes are arranged in an arc so that the angle of each swirl vane 84 can be individually adjusted by varying the hole into which the pin 96 is placed when the combustor is assembled. A similar array of holes 98 are formed in the flow guide 46 to allow individual adjustment of the angle of the swirl vanes 86. Thus, according to the current invention, the angle of the swirl vanes 84 and 86 can be individually adjusted to obtain the optimum swirl angles A and B for the incoming air.

Figure 9 shows an alternative embodiment of the current invention whereby all of the pairs of swirl vanes 84 and 86 are rotatably mounted on close fitting alignment bolts 112, instead of mounting alternating vane pairs on the secondary fuel peg supply tubes 72. The head of each bolt 112 is secured to the flange 88 and a nut 114 is threaded onto the bolt to secure the assembly in place. In this embodiment, the fuel tubes 72 extend directly across the inlet of the passages 90 and 92 to the manifold 74.

Since the inner liner 44 is directly exposed to the hot combustion gas in the primary combustion zone 36, it is important to cool the liner, especially at its downstream end adjacent the outlet 71. According to the current invention, this is accomplished by forming a number of holes 94 in the radially extending portion of the inner liner 44, as shown in Figure 3. These holes 94 allow a portion 66 of the compressed air 8 from the compressor section 2 to enter the annular passage 70 formed between the inner liner 44 and the middle liner 42.

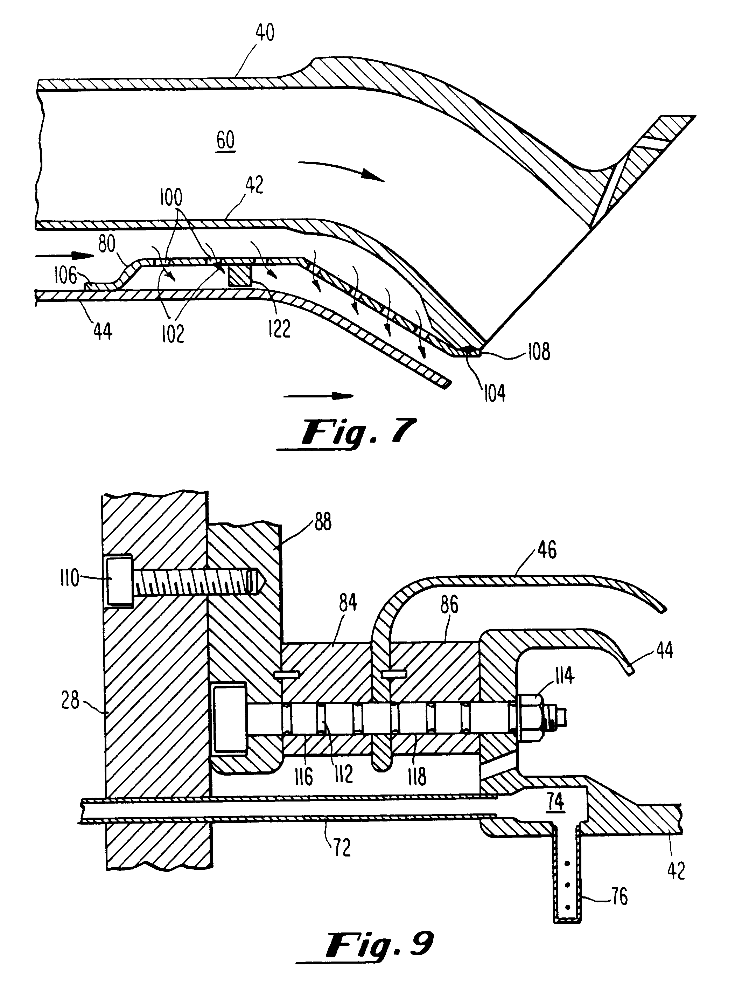

As shown in Figure 7, according at an important aspect of the current invention, an approximately cylindrical baffle 80 is located at the outlet of the passage 70 and extends between the inner liner 44 and the middle liner 42. In the preferred embodiment, the baffle 80 is attached at its downstream end 108 to the downstream end of the middle liner 42 via spot welds 104. Alternatively, the downstream end 108 of the baffle 80 could be attached to the middle liner 42 via a fillet weld. The front end 106 of the baffle 80 is sprung loaded to bear against the outer surface of the inner liner 44. As shown in Figures 3 and 7 the front end 106 of the baffle 80 extends upstream only about one-third the length of the inner liner 44. However, in some cases, it may be preferable to extend the front end 106 of the baffle 80 further upstream so that the baffle encircles the entire large diameter portion of the inner liner 44.

As shown in Figure 7, a number of holes 100 are distributed around the circumference of the baffle 80 and divide the cooling air 66 into a number of jets 102 that impinge on the outer surface of the inner liner 44. Thus, the baffle 80 allows the cooling air 66 to be used much more effectively in terms of cooling the inner liner 44.

To prevent the inner liner 44 from vibrating at it downstream end, in one embodiment of the current invention, inwardly projecting snubber blocks 122 are distributed around the circumference of the baffle 80 to provide frictional damping for the inner liner 44, as shown in Figure 7. The snubbers 122 are preferably coated with a wear resistant coating. Preferably, the snubbers 122 are sized so that there is a clearance between them and the inner liner 44 at assembly. However, during operation the differential thermal expansion between the inner liner 44 and the baffle 80 will cause the inner liner to grow more than the baffle and contact the snubbers 122, thereby creating the desired damping. Thus, the baffle 80 not only cools the inner liner 44 but reduces its vibration.

## Claims

1. In a gas turbine (1) having a compressor (2) for producing compressed air (8), a combustor (4) for heating said compressed air comprising a first substantially cylindrical liner (42) forming a chamber therein for containing a combustion zone (36), a second substantially cylindrical liner (40) forming an outer annular passage (68) encircling said first liner (42); a flow guide (46) forming a first inlet passage (92) having first and second portions, said first portion extending axially and being concentric with said liner, said second portion extending radially and encircling said first portion; a second inlet passage (90) for said chamber, said second inlet passage (90) having first and second portions, said first portion of said second inlet passage formed between a fuel nozzle (18) and said flow guide and extending axially and being concentric with said first portion of said first inlet passage (92), said second portion of said second inlet passage (90) extending radially and encircling said first portion of said second inlet passage (90); a plurality of first swirl vanes (86) disposed in said second portion of said first inlet passage (92); a plurality of second swirl vanes (84) disposed in said second portion of said second inlet passage (90); a plurality of fuel discharge means (76) extending into said outer annular passage (68); means (72) for rotating said first and second swirl vanes (86,84); a third substantially cylindrical liner (44) enclosed by said second liner (40), said outer annular passage (68) being formed between said first (42) and second (40) liners, said first (42) and third (44) liners forming an inner annular passage (70) therebetween; and there being means (94) for introducing cooling air into said inner annular passage (70); the combustor being characterized by a circumferentially extending baffle (80) disposed in said inner annular passage (70).

2. The combustor according to claim 1, wherein said baffle (80) has means (100) for directing cooling air introduced into said inner annular passage (70) to flow over said third liner (44).

3. The combustor according to claim 2, wherein said baffle (80) has means (122) for reducing vibration of said third liner (44).

## Patentansprüche

1. In einer Gasturbine (1) mit einem Kompressor (2) zum Herstellen von Druckluft (8), ist eine Brennkammer (4) zum Erwärmen der Druckluft, die eine erste im wesentlichen zylindrische Auskleidung (42) umfasst, die eine Kammer darin bildet, um eine Verbrennungszone (36) zu enthalten, eine zweite im wesentlichen zylindrische Auskleidung (40), die einen äußeren ringförmigen Durchgang (68) bildet, der die erste Auskleidung (42) umkreist; eine Strömungsführung (46), die einen ersten Einlassdurchgang (92) mit ersten und zweiten Teilen bildet, wobei das erste Teil sich axial erstreck und mit der Auskleidung konzentrisch ist, das zweite Teil sich radial erstreckt und das erste Teil umkreist; einen zweiten Einlassdurchgang (90) für die Kammer, wobei der zweite Einlassdurchgang (90) erste und zweite Teile hat, das erste Teil des zweiten Einlassdurchgangs zwischen einer Brennstoffdüse (18) und der Strömungsführung gebildet ist und sich axial erstreckt und mit dem ersten Teil des ersten Einlassdurchgangs (92) konzentrisch ist, wobei das zweite Teil des zweiten Einlassdurchgangs (90) sich radial erstreckt und das erste Teil des zweiten Einlassdurchgangs (90) umkreist; eine Vielzahl von ersten Wirbelschaufeln (86), die in dem zweiten Teil des ersten Einlassdurchgangs (92) angeordnet sind; eine Vielzahl von zweiten Wirbelschaufeln (84), die in dem zweiten Teil des zweiten Einlassdurchgangs (90) angeordnet sind; eine Vielzahl von Brennstoffentlassungsmitteln (76), die sich in den äußeren ringförmigen Durchgang (68) erstrecken; ein Mittel (72) zum Drehen der ersten und zweiten Wirbelschaufeln (86,84); eine dritte im wesentlichen zylindrische Auskleidung (44), die von der zweiten Auskleidung (40) umschlossen ist, wobei der äußere ringförmige Durchgang (68) zwischen den ersten (42) und den zweiten (40) Auskleidungen gebildet ist, die ersten (42) und dritten (44) Auskleidungen einen inneren ringförmigen Durchgang (70) zwischen sich bilden; und ein Mittel (94) vorhanden ist, um Abkühlungsluft in den inneren ringförmigen Durchgang (70) einzuführen; wobei die Brennkammer durch eine sich peripher erstreckende Ablenkplatte (80) gekennzeichnet ist, die in dem inneren ringförmigen Durchgang (70) angeordnet ist.

2. Brennkammer nach Anspruch 1, in der die Ablenkplatte (80) ein Mittel (100) hat, um in den inneren ringförmigen Durchgang (70) eingeführte Abkühlungsluft so zu richten, um über die dritte Auskleidung (44) zu strömen.

3. Brennkammer nach Anspruch 2, in der die Ablenkplatte (80) ein Mittel (122) hat, um Schwingung der dritten Auskleidung (44) zu verringern.

## Revendications

1. Dans une turbine à gaz (1) comprenant un compresseur (2) servant à produire de l'air comprimé (8), une chambre de combustion (4) servant à chauffer ledit air comprimé et comprenant une première chemise (42) sensiblement cylindrique qui forme une chambre destiné à contenir une zone de combustion (36), une deuxième chemise (40) sensiblement cylindrique qui forme un passage extérieur annulaire (68) entourant ladite première chemise (42), un élément (46) de guidage de l'écoulement qui forme un premier passage d'entrée (92) présentant des première et deuxième parties, ladite première partie s'étendant axialement et étant concentrique à ladite chemise, ladite deuxième partie s'étendant radialement et entourant ladite première partie, un deuxième passage d'entrée (90) dans ladite chambre, ledit deuxième passage d'entrée (90) présentant des première et deuxième parties, ladite première partie dudit deuxième passage d'entrée étant formée entre un injecteur de carburant (18) et ledit élément de guidage de l'écoulement et s'étendant axialement en étant concentrique à ladite première partie dudit premier passage d'entrée (92), ladite deuxième partie dudit deuxième passage d'entrée (90) s'étendant radialement et entourant ladite première partie dudit deuxième passage d'entrée (90), une pluralité de premières ailettes de tourbillonnement (86) disposées dans ladite deuxième partie dudit premier passage d'entrée (92), une pluralité de deuxièmes ailettes de tourbillonnement (84) disposées dans ladite deuxième partie dudit deuxième passage d'entrée (90), une pluralité de moyens (76) de décharge de carburant s'étendant jusque dans ledit passage extérieur annulaire (68), des moyens (72) servant à faire tourner lesdites premières et deuxièmes ailettes de tourbillonnement (86, 84), une troisième chemise (44) sensiblement cylindrique qui est entourée par ladite deuxième chemise (40), ledit passage extérieur annulaire (68) étant formé entre lesdites première (42) et deuxième (40) chemises, lesdites première (42) et troisième (44) chemises formant entre elles un passage intérieur annulaire (70), et des moyens (94) servant à introduire de l'air de refroidissement dans ledit passage intérieur annulaire (70), la chambre de combustion étant caractérisée par une cloison (80) qui s'étend dans le sens de la circonférence et qui est placée dans ledit passage intérieur annulaire (70).

2. Chambre de combustion selon la revendication 1, dans laquelle ladite cloison (80) comporte des moyens (100) pour diriger l'air de refroidissement introduit dans ledit passage intérieur annulaire (70) afin qu'il s'écoule sur ladite troisième chemise (44).

3. Chambre de combustion selon la revendication 2, dans laquelle ladite cloison (80) comporte des moyens (122) pour réduire les vibrations de ladite troisième chemise (44).
